# EUROPEAN PATENT APPLICATION

(11) **EP 3 730 749 A1**
(43) Date of publication of application: **28.10.2020**
(21) Application number: 19170812.2
(22) Date of filing: 24.04.2019
(51) Int. Cl.: F01K 3/18, F22B 1/02, F01K 13/02

(54) **EFFECTIVE CHARGING PROCESS OF AN ENERGY CONVERSION SYSTEM**

(71) Applicant: Siemens Gamesa Renewable Energy GmbH & Co. KG, 20097 Hamburg (DE)
(72) Inventor: Barmeier, Till Andreas, 20259 Hamburg (DE); Seidel, Volker, 08860 Castelldefels (ES)
(74) Representative: Aspacher, Karl-Georg

(57) **Abstract**

It is described an arrangement for storing heat energy and in particular providing electric energy from heat energy, the arrangement comprising: a storage (3) for storing heat energy having a charging inlet (5) and a charging outlet (7); a tank (9) for holding water for a steam generator (11), in particular heat recovery steam generator, the tank (9) having an inlet (13) and an outlet (15), a storage-steam-generator pipe (17) between the charging outlet (7) of the storage (3) and the inlet (19) of a heat recovery steam generator (11); a storage-steam-generator valve (25, V4) within the storage-steam-generator pipe (17), in particular within a first portion (27) of the storage-steam-generator pipe allowing to temporarily open the storage-steam-generator pipe (17).

## Description

### Field of invention

The present invention relates to an arrangement and a method for storing heat energy from electric energy and providing electric energy from heat energy.

### Art Background

Conventionally, heat storages are used to store fluctuating electrical energy produced by for example renewable energy as heat. In times of high demand and low production of electric energy, the stored heat can be reconverted back into electrical energy and can be supplied into a utility grid. Because energy storages cannot produce but can only store energy, a feasible operation may depend on a fluctuating spot price of electric energy. The lower the installation cost of the heat storage and the appendant storage plant is, the less fluctuation of the spot price is needed to make a benefit or profit.

A sensible heat storage is conventionally filled with a solid bulk material (packed bed) which may be heated up by a heat transporting fluid (for example air) in order to store the heat. The heat transporting fluid is heated by a heater (for example electric heater) which is selected from the group consisting of resistance heater, inductive heater, emitter of electromagnetic radiation and heat pump. To convert the heat energy back into electric energy, a water-steam cycle may be applied consisting of at least a steam generator, a steam turbine, a generator, a condenser, a feedwater pump and a piping system.

A high efficiency of the charge and the discharge cycle is as important as a low installation cost. For horizontal heat storages, a vertical temperature profile may be crucial to achieve a good performance. If the temperature profile is not perfectly vertical (which is usually the case), the capacity of the heat storage may be decreased in conventional systems. To achieve an even power consumption of the heater in closed loop operation and to lower heat losses when charging the heat storage, the charging process has conventionally to be stopped at the time when the temperature at the cold end (i.e. the exit of the storage) begins to rise. Therefore, in the case of a sloped temperature profile, the heat storage cannot be fully charged (meaning to one even temperature level). If the heat storage is to be charged fully, the power consumption of the heater is decreased because the heat transporting fluid which enters the heater is already preheated.

Thus, there may be a need for an arrangement and for a method for storing heat energy from electric energy and providing electric energy from heat energy, wherein the efficiency of the system is improved and in particular energy losses in open loop operation are reduced.

### Summary of the Invention

This need may be met by the subject matter according to the independent claims. Advantageous embodiments of the present invention are described by the dependent claims.

According to an embodiment of the present invention it is provided an arrangement for storing heat energy, in particular from electric energy, and in particular providing electric energy from heat energy, the arrangement comprising: a storage for storing heat energy having a charging inlet and a charging outlet; a tank for holding water for a steam generator, in particular heat recovery steam generator, the tank having an inlet and an outlet, a storage-steam-generator pipe between the charging outlet of the storage and the inlet of a heat recovery steam generator; a storage-steam-generator valve within the storage-steam-generator pipe, in particular within a first portion of the storage-steam-generator pipe allowing to temporarily open the storage-steam-generator pipe (in particular during a last portion of a charging process).

The arrangement may in particular be adapted to support a charging process of charging the storage thereby employing the storage-steam-generator pipe at an end or in an end section of the charging process such as to supply the fluid exiting from the charging outlet of the storage to the heat recovery steam generator. Thereby, the water within the tank may be heated using energy contained in the fluid exiting at the charging outlet of the storage. Thereby, the water within the tank is advantageously heated which heat may then later on be utilized by a steam turbine to produce electric energy (for example during a discharging process). In addition the heat recovery steam generator is preheated for the next start-up.

The storage-steam-generator pipe may in particular comprise several portions, for example a first portion including the storage-steam-generator valve and a second portion connected to the first portion via a first T-junction.

In general, any pipe mentioned or specified within this application is configured to convey the fluid, in particular air at temperatures between ambient temperature and 1000°C. As used within the present application, a T-junction may be a device having (at least) three connector portions allowing to connect to each other at least three pipes. The shape of the T-junction may be same or similar or different from a "T". Using a T-junction communicates with each other interior lumens of three connected pipes.

The storage may for example comprise solid bulk material, such as stone, arranged or packed in a particular manner. The fluid may for example comprise air. The charging inlet is an opening leading to the interior of the storage through which the fluid enters the storage during a charging process. A charging outlet of the storage is an opening of the storage through which the fluid (in particular having exchanged energy with the bulk solid material within the storage) exits the storage during the charging process. In particular, the charging inlet may correspond to a discharging outlet of the storage being an opening through which the fluid exits the storage during a discharge process. In particular, the charging outlet of the storage may correspond to a discharging inlet of the storage through which the fluid enters the interior of the storage during a discharging process. Thus, charging and discharging may be employed by reversing the flow direction through the storage (and also the heater mentioned below). The tank may be adapted for holding water which may then be utilized within a (conventional) steam turbine.

For operating the steam turbine, the steam generator, in particular heat recovery steam generator, is utilized which is connected to the water tank. The storage-steam-generator pipe between the charging outlet of the storage and the inlet of the heat recovery steam generator may be utilized during an end section or end period of the charging process to supply the (partially) heated fluid to the steam generator, to advantageously deposit some of the heat energy in heat energy of the water. This heat energy may later be utilized using the reconversion of heat energy to electric energy using the steam turbine.

Providing the storage-steam-generator valve allows to selectively open the connection between the charging outlet of the storage and the steam generator. Thereby, only in a particular portion of the charging process, this connection may be opened for the fluid to stream into the steam generator and to transfer some heat energy to the water.

Providing the storage-steam-generator pipe as well as the storage-steam-generator valve may enable to slightly or considerably extend the charging process compared to a conventional charging process. In the conventional charging process, the charging process is stopped at the time when the temperature at the cold end begins to rise, i.e. when the temperature at the charging exit of the storage is above a threshold. However, according to embodiments of the present invention, the charging process may continue for some time without wasting energy, since the heated fluid exiting from the storage advantageously heats the water within the water tank. When the charging process is extended, advantageously, a more even temperature distribution may be achieved within the storage and in particular, the storage may be more fully charged. Thereby, efficiency may be improved.

According to an embodiment of the present invention, the arrangement is adapted to close the storage-steam-generator valve during a discharging process to discharge the storage and during most of a charging process to charge the storage.

When the storage-steam-generator valve is closed during the discharging process, the conventionally known discharging process is not altered. Thereby, the discharging process may not be affected by the storage-steam-generator pipe.

According to an embodiment of the present invention, the arrangement is adapted to open the storage-steam-generator valve during a portion of the charging process, at which a temperature of fluid exiting from the storage (after heat uptake from the storage) at the charge outlet of the storage rises above a first threshold and/or a first threshold rate, but is below a second threshold and/or a second threshold rate.

Conventionally, the charging process may have been stopped when the temperature of the fluid exiting from the storage at the charging outlet rises above the first threshold and/or a first threshold rate. However, according to this embodiment of the present invention, the charging process continues until for example the fluid exiting from the storage and the charging outlet has a temperature equal to or greater than a second threshold and/or a second threshold rate being greater than the first threshold/first threshold rate. Thereby, efficiency may be improved, the storage may for example be filled more completely and the temperature distribution within the storage may be more even than if the charging process would be stopped earlier.

According to an embodiment of the present invention, the storage-steam-generator pipe comprises a second portion connected on one end to the first portion of the storage-steam-generator pipe via a first T-junction and connected on another end to the steam generator fluid inlet.

The second portion of the storage-steam-generator pipe may advantageously also be used during a discharging process when the fluid exiting at a discharging outlet of the heater flows via a heater-steam-generator pipe and the second portion of the storage-steam-generator pipe to the steam generator. In particular, the first T-junction connects an end of the heater-steam-generator pipe, an end of the first portion of the storage-steam-generator pipe and an end of the second portion of the storage-steam-generator pipe with each other. A conventional arrangement may not comprise a first T-junction as well as the first portion of the storage-steam-generator pipe and may also not comprise a heater-steam-generator valve arranged within the heater-steam-generator pipe.

According to an embodiment of the present invention, the arrangement further comprises an electric heater or another heat source having a charging inlet (being a discharging outlet) and a charging outlet (being a discharging inlet) for the fluid for heating the fluid during a charging process of charging the storage, wherein the charging outlet of the heater is connected with the charging inlet of the storage.

By providing the heater, the storage can be charged during a charging process with fluid heated by the heater using electric energy. During a discharging process, the heater may not be operated to produce heat energy. A discharge outlet of the heater may be connected to a second T-junction which may be connected to a heater-steam-generator pipe which includes the heater-steam-generator valve.

According to an embodiment of the present invention, the arrangement further comprises a heater-steam-generator pipe arranged between the second T-junction connecting to the discharging outlet of the heater and the first T-junction. In particular, the heater-steam-generator pipe may be closed or opened on demand depending on performing a charging process or a discharging process.

In other embodiments the heater may not have a discharging outlet heater and may be arranged in such a manner that the flow direction through the heater is not reversed when switching from a discharging process to a charging process.

According to an embodiment of the present invention, the arrangement further comprises a heater-steam-generator valve within the heater-steam-generator pipe, wherein the arrangement is adapted to close the heater-steam-generator valve during an entire charging process and to open the heater-steam-generator valve during a discharging process.

The heater-steam-generator valve enables to close or open the heater-steam-generator pipe for performing a charging process or a discharging process, respectively.

According to an embodiment of the present invention, the arrangement further comprises the steam generator, in particular HRSG, connected with the tank and having a fluid inlet and a fluid outlet, and a steam-generator-outlet valve in a steam generator outlet pipe downstream the steam generator outlet.

The steam generator may be adapted to generate steam using water stored in the water tank which is heated by the fluid entering the steam generator at its inlet. The fluid may enter the steam generator not only, as is conventionally known, during a discharging process, but also during a portion of a charging process, in particular via the first portion and the second portion of the storage-steam-generator pipe.

According to an embodiment of the present invention, the arrangement further comprises an upstream charging pipe including an upstream-charging-pipe valve connected via the second T-junction to the charging inlet of the heater; a downstream charging pipe connected via a third T-junction to the charging outlet of the storage and passing through a fourth T-junction and including a downstream-charging-pipe valve and connected to a fifth T-junction connected to the steam generator outlet pipe and a blower pipe including a blower, wherein the fourth T-junction is also connected to the first portion of the storage-steam-generator pipe.

The charging pipe system may be provided for performing essentially a charging process. The upstream charging pipe may be upstream the heater and the storage during the charging process. The downstream charging pipe may be downstream the heater and the storage during the charging process. The upstream-charging-pipe valve may be opened during the charging process and closed during the discharging process. Furthermore, an upstream discharging valve may be closed during the charging process and opened during the discharging process. Thus, switching the states of the upstream-charging-pipe valve and the downstream discharging valve may switch flow direction of the fluid through the heater and the storage. The downstream charging pipe may allow to lead back the fluid to a blower to drive the flow of the fluid. The several T-junctions advantageously connect several pipe ends with each other.

According to another embodiment the arrangement of pipes is different and the cycle can be either open or closed. According to an embodiment of the present invention, the arrangement further comprises an upstream discharging pipe including an upstream-discharging-pipe valve and connected on one end to a sixth T-junction and on another end to the third T-junction, wherein the upstream charging pipe runs through the sixth T-junction.

The upstream discharging valve may be closed during a charging process and opened during a discharging process. The upstream charging pipe may be considered to comprise portions each being connected to the sixth T-junction.

According to an embodiment of the present invention, the arrangement is adapted to open the upstream-charging-pipe valve, the downstream-charging-pipe valve and to close the upstream-discharging-pipe valve, the heater-steam-generator valve, the storage-steam-generator valve, the steam-generator-outlet valve during most of the charging process. Thereby, during most of the charging process (in which the storage is charged with heat energy), the fluid heated by the heater passes through the storage and transfer parts of its heat energy to the storage. The fluid exiting from the storage is then conveyed in a piping system downstream the storage outlet and is for example driven by a blower in order to re-enter the heater to be heated again and then to be supplied to the storage for further delivering heat energy to the storage.

Thereby, the setting of the valves as specified during most of the charging process may prevail until the temperature of the fluid exiting from the storage is above the first temperature threshold or first temperature rate threshold. In this situation, the valve settings may be changed as explained below.

According to an embodiment of the present invention, the arrangement is adapted to open the upstream-charging-pipe valve, the storage-steam-generator valve, the steam-generator-outlet valve and to close the upstream-discharging-pipe valve, the heater-steam-generator valve, the downstream-charging-pipe valve during a portion of the charging process.

This setting may be applied for example in the situation, in which the temperature of the fluid exiting from the storage during the charging process is above a first threshold and/or the temperature increase is above a first threshold rate but the temperature of the fluid exiting from the storage is below a second threshold and/or the temperature increase is below a second threshold rate of the temperature. In the end portion of the charging process, the heater is still operated to heat the fluid passing through it and the heated fluid is conveyed into the storage and exchanges a portion of its heat energy with for example solid bulk material within the storage. However, the fluid exiting the storage is then led, in particular via the storage-steam-generator pipe to the steam generator, in order to heat the water contained in the water tank. Thus, even if the fluid exiting from the storage contains some heat energy, this heat energy is not wasted but used for partially heating up the water contained in the water tank.

If the temperature of the fluid exiting from the storage exceeds a second temperature threshold or if the rate change of the temperature of the fluid exiting from the storage exceeds a second temperature rate threshold, the settings of the valve may be switched or the charging process may be terminated. Termination of the charging process may involve disabling the heater and/or disabling a blower conveying the fluid and may in particular involve closing all valves or at least those valves which thereby prohibit fluid from entering or exiting the storage.

According to an embodiment of the present invention, the arrangement is adapted to open the upstream-discharging-pipe valve, the heater-steam-generator valve, the steam-generator-outlet valve and to close the upstream-charging-pipe valve, the storage-steam-generator valve, the downstream-charging-pipe valve during the discharging process.

The discharging process may be similar to a conventional discharging process, however via the heater-steam-generator valve which is opened. In a conventional system, the heater-steam-generator valve was not present.

According to an embodiment of the present invention, the outlet of the tank is connected to a water inlet of the steam generator, the arrangement in particular further comprising: a steam turbine, connected to the steam generator.

Via the water inlet of the steam generator, the partially heated water contained in the water tank may be supplied to the steam generator which may then generate steam for example in a discharging process of the storage. The steam may be supplied to a steam turbine which may generate electric energy using the steam.

It should be understood that features, individually or in any combination, disclosed, explained or provided for an arrangement for storing heat energy from electric energy is also applicable to a method for storing heat energy from electric energy, individually or in any combination according to embodiments of the present invention.

According to an embodiment of the present invention it is provided a method for storing heat energy from electric energy and in particular providing electric energy from heat energy, the method comprising: storing heat energy in a storage having a charging inlet and a charging outlet; temporarily opening a storage-steam-generator valve within a storage-steam-generator pipe arranged between the charging outlet of the storage and an fluid inlet of a steam generator.

In the present application, the upstream-charging-pipe valve may also be referred to as V1, the upstream-discharging-pipe valve may also be referred to as V2, the heater-steam-generator valve may also be referred to as V3, the storage-steam-generator valve may also be referred to as V4, the downstream-charging-pipe valve may also be referred to as V5 and the steam-generator-outlet valve may also be referred to as V6.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates an arrangement for storing heat energy from electric energy and also providing electric energy from heat energy according to an embodiment of the present invention during a charging process;
Fig. 2 schematically illustrates an arrangement for storing heat energy from electric energy and also providing electric energy from heat energy according to an embodiment of the present invention during an end of a charging process;
Fig. 3 schematically illustrates an arrangement for storing heat energy from electric energy and also providing electric energy from heat energy according to an embodiment of the present invention during a discharging process;
Figs. 4 and 5 schematically illustrate temperature profiles within a storage as considered in embodiments of the present invention; and
Fig. 6 schematically illustrates a conventional heat storage system.

### Detailed Description

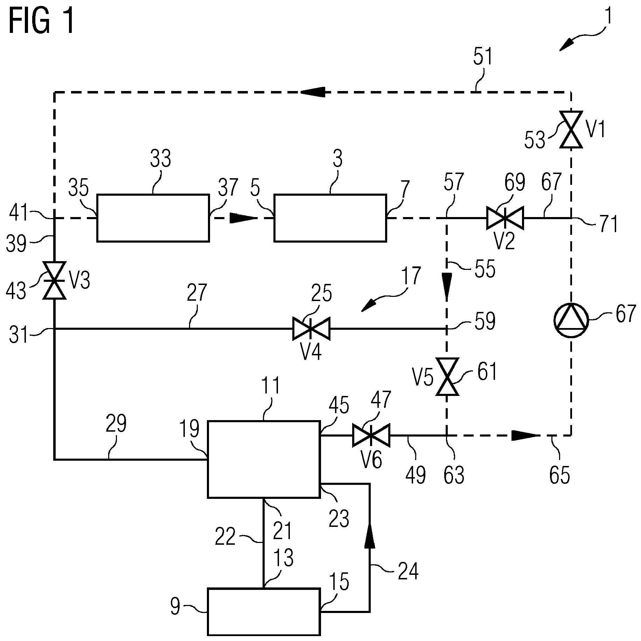

The arrangement 1 illustrated in Figs. 1 to 3 for storing heat energy from electric energy and also providing electric energy from heat energy comprises a storage 3 for storing heat energy having a charging inlet 5 and a charging outlet 7. The charging inlet 5 corresponds to a discharging outlet during a discharging process and the charging outlet 7 corresponds to a discharging inlet during a discharging process. The arrangement 1 further comprises a tank, in particular water tank 9, for holding water for a steam generator 11, in particular a heat recovery steam generator 11, wherein the tank 9 has an inlet 13 and an outlet 15. The arrangement 1 further comprises a storage-steam-generator pipe 17 between the charging outlet 7 of the storage 3 and the heat recovery steam generator 11. For this purpose, the heat recovery steam generator 11 has a fluid inlet 19 via which fluid passing through the storage-steam-generator pipe 17 enters the steam generator 11. Furthermore, the steam generator 11 comprises a water outlet 21 via which water which has been heated within a heat exchanger of the steam generator 11 using the fluid entered at the fluid inlet 19 can pass to the water tank 9. In particular, the steam generator 11 is configured to heat up water which has exited via the water outlet 15 of the water tank and is conveyed via a water inlet 23 into the steam generator 11. The heat exchanger of the steam generator 11 thereby heats up the water by heat exchange using heat from the fluid having entered the steam generator at the fluid inlet 19.

Thus, the storage-steam-generator pipe 17 is arranged between the charging outlet 7 of the storage 3 and the fluid inlet 19 of the heat recovery steam generator 11. The heated water is then stored in the water tank 9.

The arrangement 1 further comprises a storage-steam-generator valve 25 (V4) within the storage-steam-generator pipe 17, in particular within a first portion 27 of the storage-steam-generator pipe 17.

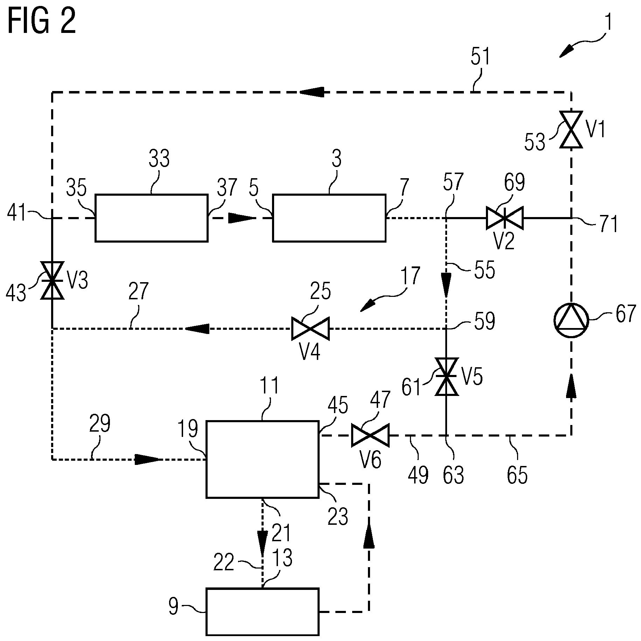

During a first portion of a charging process, as is depicted in Fig. 1, the storage-steam-generator valve 25 (V4) is closed, it can however be opened during a second portion or an end portion of the charging process as will be explained with reference to Fig. 2 below.

The valve states are indicated in Figs. 1 to 3 with a bar indicating a closed state and without a bar indicating an opened state. In Figs. 1 to 3, the flow direction of the fluid (as well as the flow direction of the water between the water tank 9 and the steam generator 11) is indicated by arrows. In pipe sections without any arrow, the flow of the fluid is essentially zero.

The storage-steam-generator pipe 17 comprises a second portion 29 which is connected on one end to the first portion 27 of the storage-steam-generator pipe 17 via a first T-junction 31 and on another end to the fluid inlet 19 of the steam generator 11. The arrangement 1 further comprises an electric heater 33 having a charging inlet 35 (being a discharging outlet) and having a charging outlet 37 (being a discharging inlet) for the fluid for heating the fluid during a charging process (illustrated in Fig. 1) for charging the storage 3. Therein, the charging outlet 37 is connected with the charging inlet 5 of the storage 3.

The arrangement 1 further comprises a heater-steam-generator pipe 39 arranged between a second T-junction 41 connecting to the discharging outlet 35 of the heater 33 and further connected to the first T-junction 31.

The arrangement 1 further comprises a heater-steam-generator valve 43 (V3) within the heater-steam-generator pipe 39, wherein the arrangement 1 is adapted to close the heater-steam-generator valve 43 (V3) during an entire charging process (as is illustrated in Fig. 1) and to open the heater-steam-generator valve 43 during a discharging process, as is illustrated in Fig. 2.

The arrangement 1 further comprises a steam generator 11, in particular a heat recovery steam generator, which is connected via the water outlet 21 to the water tank 9 and which has the fluid inlet 19 and further has a fluid outlet 45. Furthermore, a steam-generator-outlet valve (V6) is provided in a steam-generator-outlet pipe 49 downstream the steam-generator-fluid outlet 45.

The arrangement 1 further comprises a charging pipe system comprising an upstream charging pipe 51 including an upstream-charging-pipe valve 53 (V1) connected via the second T-junction 41 to the charging inlet 35 of the heater 33. The charging pipe system further comprises a downstream charging pipe 55 connected via a third T-junction 57 to the charging outlet 7 of the storage 3 and passing through a fourth T-junction 59 and including a downstream-charging-pipe valve 61 (V5) and connected to a fifth T-junction 63 connected to the steam-generator-outlet pipe 49 and a blower pipe 65 including a blower 67. The fourth T-junction 59 is also connected to the first portion 27 of the storage-steam-generator pipe 17.

The arrangement 1 further comprises an upstream discharging pipe 67 including an upstream-discharging-pipe valve 69 (V2) and connected on one end to a sixth T-junction 71 and on another end to the third T-junction 57. The upstream charging pipe 51 runs through the sixth T-junction 71.

During most of the charging process (illustrated in Fig. 1), the arrangement is adapted to open the upstream-charging-pipe valve 53 (V1), the downstream-charging-pipe valve 61 (V5), and to close the upstream-discharging-pipe valve 69 (V2), the heater-steam-generator valve 43 (V3), the storage-steam-generator valve 25 (V4), and the steam-generator-outlet valve 47 (V6). As can be taken from Fig. 1 illustrating a first portion of a charging process, the fluid is driven by the blower 67 running through the pipe sections 65, 51, running through the heater 33, running through storage 3, running through pipe section 55 and again running through the pipe section 65 back to the blower 67.

During charging the storage, the temperature of the fluid exiting at the charging outlet 7 of the storage increases with time. When the temperature of the fluid at the outlet 7 of the storage is above a first threshold or if a temperature change of the temperature of the fluid exiting at the storage outlet 7 is above a first rate threshold, the arrangement may switch to another valve setting, as is illustrated in Fig. 2.

In particular, comparing Figs. 1 and 2, the valve settings of the valves 25 (V4), 47 (V6) and 61 (V5) have changed. Thus, the arrangement is adapted to open the upstream-charging-pipe valve 53 (V1), the storage-steam-generator valve 25 (V4), the steam-generator-outlet valve 47 (V6) and to close the upstream-discharging-pipe valve 69 (V2), the heater-steam-generator valve 43 (V3) and the downstream-charging-pipe valve 61 (V5) during an end portion of the charging process (illustrated in Fig. 2). Thereby, the fluid exiting at the storage outlet 7 runs through the storage-steam-generator pipe 17, in particular its first portion 27 and its second portion 29 to enter at the fluid inlet 19 the steam generator 11. Thereby, the partially heated fluid can heat up water in a not illustrated heat exchanger which is then stored within the water tank 9.

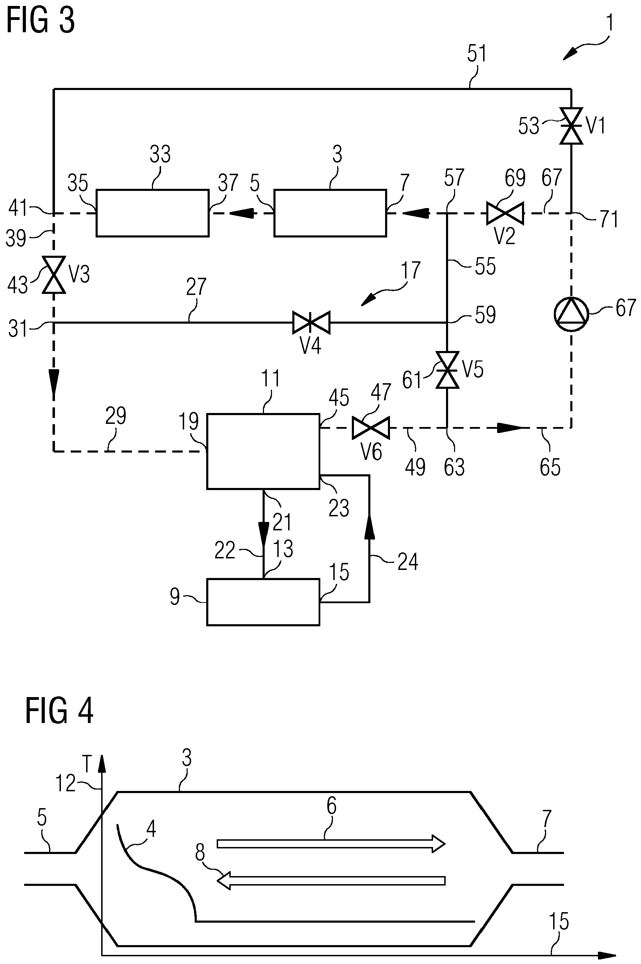

During a discharging process, as is illustrated in Fig. 3, the arrangement is adapted to open the upstream-discharging-pipe valve 69 (V2), the heater-steam-generator valve 43 (V3), the steam-generator-outlet valve 47 (V6) and to close the upstream-charging-pipe valve 53 (V1), the storage-steam-generator valve 25 (V4) and the downstream-charging-pipe valve 61 (V5). Thereby, the flow direction through the storage 3 and the heater 33 is reversed compared to a charging process and the fluid heated by the storage is entering the fluid inlet 19 of the steam generator. The steam generator 11 in turn generates steam which is used in a steam turbine to produce electric energy.

To achieve constant power consumption, the exiting heat transporting fluid has to be cooled before it enters the heater or the mass flow has to increase as soon as the temperature of the cold and of the heat storage rises at the end of the charging process. Embodiments of the present invention use the existing heat recovery steam generator as a heat exchanger to transfer the thermal energy from the heat transporting fluid to the feedwater (inside the water tank of the water-steam cycle). Thereby, the heat transporting fluid is cooled and the heat is not lost to the environment but stored inside the water tank 9 until the heat storage 3 is being discharged and the steam is being produced.

To be able to guide the heat transporting fluid through the steam generator when charging the heat storage 3, two additional valves, namely valves V3, V4 are installed in the arrangement illustrated in Fig. 1 to 3. Further, a connection between the steam generator and the water tank has been installed, i.e. the water pipe 22 from the water outlet 21 of the steam generator to the water tank inlet 13. Furthermore, a water pipe 24 connecting the water tank outlet 15 to the water inlet 23 of the steam generator is introduced. As soon as the temperature of the heat transporting fluid at the cold end (for example outlet 7) of the heat storage 3 begins to rise (in particular above a selectable threshold), the valve 61 (V5) is closed, while the valves 25 (V4) and 47 (V6) are opened (see Fig. 2). For discharging the heat storage 3 (see Fig. 3), the valves 53 (V1) and 25 (V4) have to be closed, while the valves 69 (V2) and 43 (V3) have to be opened.

It is possible to use only parts of the heat recovery steam generator as a heat exchanger, i.e. only the economizer. According to embodiments of the present invention, in a thermal energy storage plant, a steam generator is used as a heat exchanger. Thereby, most of the volume of the heat storage can be used without significant heat losses to the environment. Also, since the feedwater is pre-heated, the response time of the discharging process (especially water-steam cycle) may be reduced because the feedwater needs less energy to be evaporated. Due to the higher feedwater temperature and the subsequent higher average head addition temperature, the efficiency of the steam cycle may increase.

At all times during charge and discharge, the blower which makes the heat transporting fluid flow through the piping system may be protected from high temperatures, because the fluid is cooled. Because the temperature difference between the openings of the heater can be kept constant, the power consumption during the charging process can be kept constant as well. This may be important in order to make accurate purchases at the electricity market.

Fig. 4 schematically illustrates the storage 3 including a temperature profile 4 within the storage 3 when the storage is essentially discharged, i.e. essentially empty of any heat energy. The ordinate 12 illustrates the temperature while the abscissa 14 indicates the location within the storage 3. The arrow 6 shows a shifting direction of the temperature profile when charging, the arrow 8 shows the shifting direction of the temperature profile when discharging.

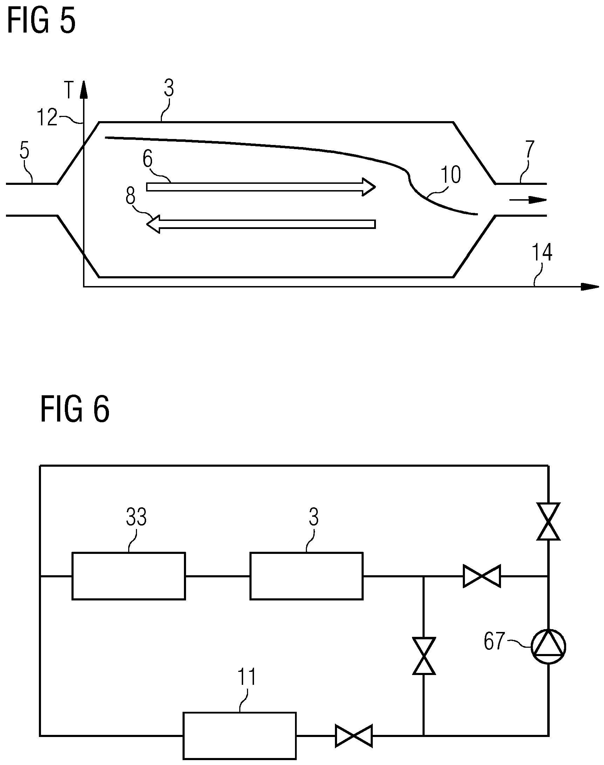

Fig. 5 also illustrates the storage 3 in addition of a temperature profile 10 within the storage 3 when the storage is essentially charged. During an end of a charging process as illustrated in Fig. 5, the temperature of the fluid exiting at the charging outlet 7 of the storage 3 has increased. When in this situation the valve setting of Fig. 2 is applied, the heat energy comprised within the fluid having the elevated temperature can be recovered by heating up water using the steam generator 11. Thus, according to embodiments of the present invention, the charging process is continued for a longer time than is conventionally applied.

Fig. 6 illustrates in a schematic form a conventional energy storage system, wherein elements similar in structure or function are indicated with the same reference sign but preceded by the number 1.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement for storing heat energy, in particular from electric energy, and in particular providing electric energy from heat energy, the arrangement comprising:
a storage (3) for storing heat energy having a charging inlet (5) and a charging outlet (7);
a tank (9) for holding water for a steam generator (11), in particular heat recovery steam generator, the tank (9) having an inlet (13) and an outlet (15),
a storage-steam-generator pipe (17) between the charging outlet (7) of the storage (3) and the inlet (19) of a heat recovery steam generator (11);
a storage-steam-generator valve (25, V4) within the storage-steam-generator pipe (17), in particular within a first portion (27) of the storage-steam-generator pipe allowing to temporarily open the storage-steam-generator pipe (17) .

2. Arrangement according to the preceding claim, wherein the arrangement is adapted to close the storage-steam-generator valve (25, V4) during a discharging process to discharge the storage (3) and during most of a charging process to charge the storage (3).

3. Arrangement according to one of the preceding claims, wherein the arrangement is adapted to open the storage-steam-generator valve (25, V4) during a portion of the charging process, at which a temperature of fluid exiting from the storage (3) at the charging outlet (7) of the storage rises above a first threshold and/or a first threshold rate, but is below a second threshold and/or a second threshold rate.

4. Arrangement according to one of the preceding claims, wherein the storage-steam-generator pipe (17) comprises a second portion (29) connected on one end to the first portion (27) of the storage-steam-generator pipe via a first T-junction (31) and on another end to the steam generator (11).

5. Arrangement according to one of the preceding claims, further comprising:
an electric heater (33) or another heat source, having a charging inlet (35) and a charging outlet (37) for the fluid for heating the fluid during a charging process of charging the storage,
wherein the charging outlet (37) of the heater (33) is connected with the charging inlet (5) of the storage (3).

6. Arrangement according to one of the preceding claims, further comprising:
a heater-steam-generator pipe (39) arranged between a second T-junction (41) connecting to a discharging outlet (35) of the heater (33) and the first T-junction (31).

7. Arrangement according to one of the preceding claims, further comprising:
a heater-steam-generator valve (43, V3) within the heater-steam-generator pipe (39),
wherein the arrangement is adapted to close the heater-steam-generator valve (43, V3) during an entire charging process and to open the heater-steam-generator valve (43, V3) during a discharging process.

8. Arrangement according to one of the preceding claims, further comprising:
the steam generator (11), in particular HRSG, connected with the tank (9) and having a fluid inlet (19) and a fluid outlet (45),
a steam-generator-outlet valve (47, V6) in a steam generator outlet pipe (49) downstream the steam generator outlet (45) .

9. Arrangement according to one of the preceding claims, further comprising a charging pipe system comprising:
an upstream charging pipe (51) including an upstream-charging-pipe valve (53, V1) connected via the second T-junction (41) to the charging inlet (35) of the heater (33);
a downstream charging pipe (55) connected via a third T-junction (57) to the charging outlet (7) of the storage (3) and passing through a fourth T-junction (59) and including a downstream-charging-pipe valve (61, V5) and connected to a fifth T-junction (63) connected to the steam generator outlet pipe (49) and a blower pipe (65) including a blower (67), wherein the fourth T-junction (59) is also connected to the first portion (27) of the storage-steam-generator pipe (17).

10. Arrangement according to one of the preceding claims, further comprising:
an upstream discharging pipe (67) including an upstream-discharging-pipe valve (69, V2) and connected on one end to a sixth T-junction (71) and on another end to the third T-junction (57),
wherein the upstream charging pipe (51) runs through the sixth T-junction (71).

11. Arrangement according to one of the preceding claims, wherein the arrangement is adapted to open the upstream-charging-pipe valve (V1), the downstream-charging-pipe valve (V5) and to close the upstream-discharging-pipe valve (V2), the heater-steam-generator valve (V3), the storage-steam-generator valve (V4), the steam-generator-outlet valve (V6) during most of the charging process.

12. Arrangement according to one of the preceding claims, wherein the arrangement is adapted to open the upstream-charging-pipe valve (V1), the storage-steam-generator valve (V4), the steam-generator-outlet valve (V6) and to close the upstream-discharging-pipe valve (V2), the heater-steam-generator valve (V3), the downstream-charging-pipe valve (V5) during a portion of the charging process.

13. Arrangement according to one of the preceding claims, wherein the arrangement is adapted to open the upstream-discharging-pipe valve (V2), the heater-steam-generator valve (V3), the steam-generator-outlet valve (V6) and to close the upstream-charging-pipe valve (V1), the storage-steam-generator valve (V4), the downstream-charging-pipe valve (V5) during the discharging process.

14. Arrangement according to one of the preceding claims, wherein the outlet (15) of the tank is connected to a water inlet (23) of the steam generator,
the arrangement in particular further comprising:
a steam turbine, connected to the steam generator.

15. Method for storing heat energy, in particular from electric energy, and in particular providing electric energy from heat energy, the method comprising:
storing heat energy in a storage (3) having a charging inlet (5) and a charging outlet (7);
temporarily opening a storage-steam-generator valve (25, V4) within a storage-steam-generator pipe (17) arranged between the charging outlet (7) of the storage (3) and an fluid inlet (19) of a steam generator (11).
